(19) Europäisches Patentamt
European Patent Office
Office européen des brevets

(11) Veröffentlichungsnummer: **0 278 351**
**A2**

(12) # EUROPÄISCHE PATENTANMELDUNG

(21) Anmeldenummer: **88101374.2**

(22) Anmeldetag: **01.02.88**

(51) Int. Cl.⁴: **C08G 18/10** , C08G 18/66 , C08G 18/73 , C08G 18/75 , C09D 3/72

(30) Priorität: **10.02.87 DE 3703973**

(43) Veröffentlichungstag der Anmeldung: **17.08.88 Patentblatt 88/33**

(84) Benannte Vertragsstaaten: **AT BE DE ES FR GB IT NL SE**

(71) Anmelder: **BAYER AG**
**Konzernverwaltung RP Patentabteilung**
**D-5090 Leverkusen 1 Bayerwerk(DE)**

(72) Erfinder: **Halpaap, Reinhard Dr.**
**Kleinfeldchensweg 37b**
**D-5000 Koeln 91(DE)**
Erfinder: **Bock, Manfred, Dr.**
**Mobay Corporation Mobay Road**
**Pittsburgh, PA 15205(US)**
Erfinder: **Pedain, Josef, Dr.**
**Haferkamp 6**
**D-5000 Koeln 80(DE)**
Erfinder: **Klein, Gerhard, Dr.**
**Von-Flotow-Strasse 7**
**D-4019 Monheim(DE)**
Erfinder: **Arlt, Dieter, Prof. Dr.**
**Rybnikerstrasse 2**
**D-5000 Koeln 80(DE)**

(54) **Verfahren zur Herstellung von Isocyanatgruppen aufweisenden Prepolymeren, die so hergestellten Prepolymeren und ihre Verwendung.**

(57) Ein neues Verfahren zur Herstellung von NCO-Prepolymeren durch Umsetzung von aliphatischen bzw. cycloaliphatischen Diisocyanaten mit einer an ein tertiäres Kohlenstoffatom gebundenen Isocyanatgruppe mit unterschüssigen Mengen einer Polyolkomponente, wobei man (i) als Polyolkomponente b) mindestens ein Polyesterpolyol des Molekulargewichtsbereichs 800 bis 12 000 und einer Hydroxylfuntionalität von 2 bis 6, gegebenenfalls in Abmischung mit mindestens einem niedermolekularen, mehrwertigen aliphatischen Alkohol des Molekulargewichtsbereichs 62 bis 799 verwendet, wobei die Einzelbestandteile der Komponente b) so ausgewählt werden, daß die (mittlere) Hydroxylfunktionalität der Komponente b) bei 2,1 bis 3 liegt, (ii) die Reaktionspartner unter Einhaltung eines NCO/OH-Äquivalentverhältnisses von 1,6:1 bis 2:1 zur Reaktion bringt und (iii) Art und Mengenverhältnisse der Reaktionspartner im übrigen so wählt, daß das (mittlere) Molekulargewicht der Prepolymeren innerhalb des Bereichs von 1000 bis 3000 und der NCO-Gehalt der Prepolymeren bei 4 bis 12 Gew.-% liegt, die gemäß diesem Verfahren erhaltenen, freie Isocyanatgruppen aufweisenden Prepolymere und ihre Verwendung als Isocyanatkomponente in Polyurethanlacken und -beschichtungen.

EP 0 278 351 A2

# Verfahren zur Herstellung von Isocyanatgruppen aufweisenden Prepolymeren, die so hergestellten Prepolymeren und ihre Verwendung

Die vorliegende Erfindung betrifft ein neues Verfahren zur Herstellung von NCO-Prepolymeren auf Basis von ausgewählten Ausgangsmaterialien, welches die Herstellung von besonders wertvollen, freie Isocyanatgruppen aufweisenden Lackbindemitteln einer über 2,1 liegenden NCO-Funktionalität und eines unter 2 Gew.-% liegenden Monomerengehalts gestattet, die nach dem Verfahren erhaltenen NCO-Prepolymeren und ihre Verwendung in Polyurethanlacken und -beschichtungen.

Die Herstellung von Isocyanat-endständigen Prepolymeren ist bekannt und wird z.B. in DE-OS 1 595 273, DE-OS 2 845 514, DE-OS 3 401 129, in EP-A-107 014 und EP-A-118 065 oder in den US-PS 3 706 710, 4 184 005, 4 195 009, 4 221 804, 4 273 912, 4 282 123 und 4 385 171 beschrieben.

In vielen Fällen ist es nachteilig, daß man Prepolymere mit relativ hohen Gehalten an monomeren Diisocyanaten erhält. Somit sind solche Prepolymere für viele Anwendungen nicht geeignet, da die hohen Monomerengehalte eine sichere Weiterverarbeitung beim Anwender aus toxikologischer und arbeitshygienischer Sicht verbieten. Außerdem stören zu hohe Monomerengehalte häufig durch dadurch verursachte zu große Reaktivitäten der Prepolymere mit ihren Reaktionspartnern und damit zu kurze Topfzeiten und Verarbeitungszeiten.

Es hat daher nicht an Versuchen gefehlt, monomerenarme Isocyanat-Prepolymere herzustellen, und es sind zahlreiche Verfahren dafür bekannt geworden. So lassen sich monomere Diisocyanate nach Beendigung der NCO/OH-Reaktion aus den Prepolymeren durch Dünnschichtdestillation (z.B. DE-OS 1 595 273) oder durch Schlepperdestillation mit einem höhersiedenden Hilfslösungsmittel (z.B. US 4 385 171) abtrennen, sofern es sich um flüchtige Diisocyanate handelt. Außerdem ist die Herstellung monomerenarmer Prepolymerer durch heterogene Reaktionsführung (DD-PS 155 323) oder durch zweistufige Reaktionsführung unter Verwendung unterschiedlicher Diisocyanate (DE-OS 3 401 129, EP-A-107 014, EP-A-118 065 beschrieben worden.

Alle nach dem Stand der Technik genannten Herstellverfahren für monomerenarme Isocyanatprepolymere haben jedoch den wesentlichen Nachteil, daß in der Regel entweder eine aufwendige mehrstufige Reaktionsführung oder aber nach erfolgter Herstellung mit der Destillation eine zusätzliche Arbeitsoperation erforderlich ist.

Außerdem hat es sich gezeigt, daß ganz bestimmte Isocyanatprepolymere mit speziellen geforderten Eigenschaften nach den genannten Methoden nicht herstellbar sind, wenn sie sich z.B. aufgrund ihrer Konsistenz nicht als Flüssigkeit oder Schmelze durch Dünnschichtdestillation von monomeren Diisocyanaten befreien lassen. Zu dieser Gruppe gehören z.B. solche Prepolymere ausgehend von aliphatischen Diisocyanaten und verzweigten Polyesterpolyolen, die daher bei ausreichend hohen Isocyanatgehalten nicht monomerenarm erhältlich sind.

Zweistufige Reaktionsführungen liefern häufig höhermolekulare und damit meist viskosere Prepolymer-Type. Diese sind im Hinblick auf die angestrebte Entwicklung von Hihg-solids-Systemen jedoch weniger geeignet, da für viele Anwendungen niedermolekulare Isocyanatprepolymere, die sich bei hohem Isocyanatgruppengehalt in konzentrierter Lösung mäßig viskos herstellen lassen, gefordert werden.

Es war die der Erfindung zugrundeliegende Aufgabe, ein neues Verfahren zur Herstellung von freie Isocyanatgruppen aufweisenden Prepolymeren zur Verfügung zu stellen, welches folgende Vorteile aufweist:

- Das Verfahren sollte einstufig und ohne anschließende Entfernung von überschüssigen Monomeren die Herstellung von monomerenarmen NCO-Prepolymeren (Gehalt an freien Ausgangsdiisocyanaten von unter 2, vorzugsweise von unter 1 Gew.-%) gestatten.

- Die NCO-Prepolymeren sollten einerseits einen vergleichsweise hohen NCO-Gehalt (4 bis 12 Gew.-%) und eine über 2,1, vorzugsweise bei mindestens 2,5 liegende (mittlere) NCO-Funktionalität aufweisen und andererseits höhermolekulare Polyestersegmente als elastifizierend wirkende Struktureinheiten eingebaut enthalten, so daß auf den Prepolymeren hergestellte Beschichtungen den hohen Anforderungen der Praxis bezüglich der mechanischen Eigenschaften der Lacküberzüge genügen.

Diese Aufgabe konnte durch die Bereitstellung des nachstehend näher beschriebenen erfindungsgemäßen Verfahrens gelöst werden. Bei dem erfindungsgemäßen Verfahren werden als Ausgangsdiisocyanate für die Herstellung der Prepolymeren organische Diisocyanate mit einer an ein primäres aliphatisches Kohlenstoffatom gebundenen Isocyanatgruppe und einer an ein tertiäres aliphatisches oder cycloaliphatisches Kohlenstoffatom gebundenen Isocyanatgruppe in Kombination mit ausgewählten Polyhydroxylverbindungen eingesetzt. Aus der DE-OS 3 402 623 (= EP-A-153 561) ist zwar bereits bekannt, daß aliphatisch-cycloaliphatische Diisocyanate der zuletzt genannten Art gut zur Herstellung von NCO-Prepolymeren geeignet sind, jedoch konnte aus der in dieser Ver öffentlichung gemachten Offenbarung nicht hergeleitet werden, daß unter Verwendung solcher Diisocyanate in Kombination mit ausfewählten Polyhydroxylverbindungen der nachstehend näher beschriebenen Art under Einhaltung ganz bestimmter Mengenverhältnisse der Reaktionspartner die boen skizzierte erfindungsgemäße Aufgabe gelöst werden kann.

Gegenstand der Erfindung ist ein Verfahren zur Herstellung von freie tertiäre Isocyanatgruppen aufweisenden Prepolymeren durch Umsetzung von

a) organischen Diisocyanaten des Molekulargewichtsbereichs 168 bis 320 mit einer, an ein primäres aliphatisches Kohlenstoffatom gebundenen, Isocyanatgruppe und einer, an ein tertiäres aliphatisches oder cycloaliphatisches Kohlenstoffatom gebundenen, Isocyanatgruppe, gegebenenfalls in Abmischung mit bis zu 25 Äquivalentprozent, bezogen auf die gesamte Komponente a), an Diisocyanaten mit aliphatisch und/oder cycloaliphatisch gebundenen Isocyanatgruppen des Molekulargewichtsbereichs 168 bis 300, welcher keine an tertiäre Kohlenstoffatome gebundene Isocyanatgruppen aufweisen, mit

b) einer unterschüssigen Menge einer Polyolkomponente, dadurch gekennzeichnet, daß man

(i) als Polyolkomponente b) mindestens ein Polyesterpoeyol des Molekulargewichtsbereichs 800 bis 12 000 und einer Hydroxylfunktionalität von 2 bis 6, gegebenenfalls in Abmischung mit mindestens einem niedermolekularen, mehrwertigen aliphatischen Alkohol des Molekulargewichtsbereichs 62 bis 799 verwendet, wobei die Einzelbestandteile der Komponente b) so ausgewählt werden, daß die (mittlere) Hydroxylfunktionalität der Komponente b) bei 2,1 bis 3 liegt,

(ii) die Reaktionspartner unter Einhaltung eines NCO/OH-Äquivalentverhältnisses von 1,6:1 bis 2:1 zur Reaktion bringt und

(iii) die Art und Mengenverhältnisse der Reaktionspartner im übrigen so wählt, daß das (mittlere) Molekulargewicht der Prepolymeren innerhalb des Bereichs von 1000 bis 3000 und der NCO-Gehalt der Prepolymeren bei 4 bis 12 Gew.-% liegen.

Gegenstand der Erfindung sind auch die nach diesem Verfahren erhaltenen, freie Isocyanatgruppen aufweisenden Prepolymeren.

Gegenstand der Erfindung ist auch die Verwendung der nach dem erfindungsgemäßen Verfahren erhaltenen, freie Isocyanatgruppen aufweisenden Prepolymeren, gegebenenfalls in mit Blockierungsmitteln für Isocyanatgruppen blockierter Form, als Isocyanatkomponente in Polyurethanlacken und -beschichtungen.

Ausgangsmaterialien für das erfindungsgemäße Verfahren sind

a) organische Polyisocyanate der oben unter a) genannten Art und

b) organische Polyhydroxylverbindungen der oben unter b) genannten Art.

Geeignete Diisocyanate a) sind beispielsweise solche der allgemeinen Formel

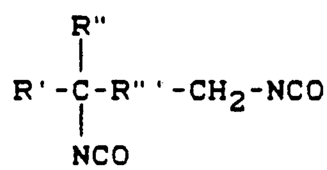

für welche

R′ und R″ für gleiche oder verschiedene Reste stehen und Alkylgruppen mit 1 bis 4 Kohlenstoffatomen bedeuten und

R‴ für einen zweiwertigen, gegebenenfalls verzweigten, gesättigten aliphatischen Kohlenwasserstoffrest mit 2 bis 9 Kohlenstoffatomen steht.

Derartige Diisocyanate bzw. ihre Herstellung sind beispielsweise in den deutschen Patentanmeldungen P 36 08 354.2 (= DE-OS 36 08 354) bzw. P 36 20 821.3 (= DE-OS 36 20 821) beschrieben. Bevorzugte derartige Diisocyanate sind solche, für welche R′ und R″ jeweils für Methylreste stehen. Typische Vertreter sind beispielsweise 1,4-Diisocyanato-4-methylpentan, 1,5-Diisocyanato-5-methylhexan, 1,6-Diisocyanato-6-methylheptan, 1,5-Diisocyanato-2,2,5-trimethyl-hexan oder 1,7-Diisocyanato-3,7-dimethyloctan.

Bevorzugt werden jedoch als Ausgangskomponente a) aliphatisch-cycloaliphatische Diisocyanate der allgemeinen Formel

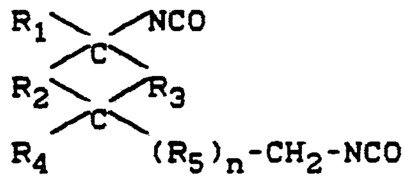

verwendet,
für welche

$R_1$ für einen Alkylrest mit 1 bis 4 Kohlenstoffatomen, vorzugsweise einen Methylrest steht,

$R_2$ und $R_3$ für gleiche oder verschiedene Reste stehen und jeweils einen zweiwertigen linearen oder verzweigten gesättigten Kohlenwasserstoffrest mit 1 bis 4, vorzugweise 1 bis 3 Kohlenstoffatomen bedeuten, wobei die Summe der Kohlenstofatome dieser Reste vorzugsweise 3 bis 6, insbesondere 4 oder 5 beträgt,

$R_4$ für Wasserstoff oder einen Alkylrest mit 1 bis 4 Kohlenstoffatomen, vorzugsweise für Wasserstoff oder einen Methylrest steht,

$R_5$ für einen zweiwertigen, linearen oder verzweigten, gesättigten aliphatischen Kohlenwasserstoffrest mit 1 bis 4, insbesondere 1 bis 3 Kohlenstoffatomen steht und

n für 0 oder 1 steht.

Als Ausgangskomponente a) besonders bevorzugte derartige aliphatisch-cycloaliphatische Diisocyanate sind z.B. 1-Isocyanato-1-methyl-4(3)-isocyanatomethylcyclohexan, welches im allgemeinen als Gemisch der 4-und 3-Isocyanatomethyl-Isomeren vorliegt, 1-Isocyanato-1-methyl-4-(4-isocyanatobut-2-yl)-cyclohexan, 1-Isocyanato-1,2,2-trimethyl-3-(2-isocyanatoethyl)-cyclopentan oder 1-Isocyanato-1,4(3)-dimethyl-4(3)-isocyanatomethylcyclohexan, welches im allgemeinen in Form eines 4-Methyl-4-isocyanatomethyl-und 3-Methyl-3-isocyanatomethyl-Isomerengemischs vorliegt. Geeignet sind jedoch auch z.B. 1-Isocyanato-1-n-butyl-3-(4-isocyanatobut-1-yl)-cyclopentan, 1-Isocyanato-1-ethyl-4-n-butyl-4-(4-isocyanatobut-1-yl)-cyclohexan oder 1-Isocyanato-1,2-dimethyl-3-ethyl-3-isocyanatomethyl-cyclopentan.

Die Herstellung derartiger aliphatisch-cycloaliphatischer Diisocyanate ist beispielsweise in EP-A-0 153 561 beschrieben. Beliebige Gemische der beispielhaft genannten Diisocyanate der zuletzt genannten allgemeinen Formeln können selbstverständlich ebenfalls als Komponente a) beim erfindungsgemäßen Verfahren verwendet werden. Ebenfalls möglich, allerdings weniger bevorzugt, ist die Mitverwendung von anderen, aus der Polyurethanchemie an sich bekannten Diisocyanaten mit aliphatisch und/oder cycloaliphatisch gebundenen Isocyanatgruppen des Molekulargewichtsbereichs 168 bis 300, welche keine an tertiäre Kohlenstoffatome gebundene Isocyanatgruppen aufweisen, wie beispielsweise von Hexamethylendiisocyanat, 1-Isocyanato-3,3,5-trimethyl-5-isocyanatomethylcyclohexan und/oder von 4,4'-Diisocyanato-dichclohexylmethan. Derartige Diisocyanate könnten beispielsweise in Menge von bis zu 25 Äquivalentprozent, bezogen auf dies gesamte Komponente a), mitverwendet werden.

Die Komponente b) weist eine (mittlere) Hydroxylfunktionalität von mindestens 2,1, vorzugsweise von 2,4 bis 3 auf und besteht entweder aus mindestens einem Polyesterpolyol eines (mittleren) Molekulargewichts von 800 bis 12 000, vorzugsweise 800 bis 4000 und insbesondere 1000 bis 3000 oder einem Gemisch aus mindestens einem derartigen Polyesterpolyol mit mindestens einem niedermolekularen mehrwertigen aliphatischen Alkohol des Molekulargewichtsbereichs 62 bis 799, vorzugsweise 62 bis 200.

Die einzelnen Bestandteile der Komponente b) können auch eine unter 2,1, d.h. bei 2 liegende Hydroxylfunktionalität aufweise. Wesentlich ist einzig und allein, daß im Falle der bevorzugten Verwendung von Gemischen unterschiedlicher Polyhydroxylverbindungen die mittlere Hydroxylfunktionalität des Gemischs bei mindestens 2,1, vorzugsweise bei 2,4 bis 3 liegt. Außerdem werden die einzelnen Bestandteile der Komponente b) und deren Mengenverhältnisse so ausgewählt, daß nach der erfolgten Umsetzung mit der Komponente a) NCO-Prepolymere resultieren, die ein mittleres Molekulargewicht von 1000 bis 3000, vorzugsweise 1200 bis 2500 aufweisen. Diese bedeutet, daß das mittlere Molekulargewicht der Komponente b) bei ca. 200 bis 2600, vorzugsweise 250 bis 2200 liegt.

Die "mittlere Funktionalität" des als Komponente b) eingesetzten Gemischs entspricht der Summe der mit der je weiligen Funktionalität der Einzelkomponenten multiplizierten Molenbrüche der Einzelkomponenten. Das "mittlere Molekulargewicht" entspricht der Summe der jeweils mit dem Molekulargewicht der Einzelkomponenten multiplizierten Molenbrüche der Einzelkomponenten. In diese Berechnumgen gehen Polyesterpolyole, die ihrerseits, herstellungsbedingt, Gemische darstellen können als "Einzelkomponente" ein, wobei die Funktionalität dieser "Einzelkomponenten" im Falle der nachstehend beispielhaft beschriebenen Umsetzungsprodukte von mehrwertigen Alkoholen mit mehrwertigen Carbonsäuren aus der Art und Menge der bei ihrer Herstellung eingesetzten Ausgangsmaterialien (Polycarbonsäuren und Polyole)

nach folgender Gleichung errechenbar ist:

$$F_{OH} = \frac{\sum Val_{OH} - \sum Val_{COOH}}{\sum Mol_{(OH + COOH)} - \sum Val_{COOH}}$$

In dieser Formel stehen "Val" für die Anzahl der Grammäquivalente an Hydroxyl-bzw. Carboxylgruppen und "Mol" für die Anzahl der Mole an Hydroxyl-bzw. Carboxylverbindungen. Die (mittlere) Funktionalität der "Einzelkomponenten" inklusive der Polycarbonatpolyole und der Polyhydroxypolyacrylate kann auch aus dem (mittleren) Molekulargewicht und dem Hydroxylgruppengehalt berechnet werden.

Das (mittlere) Molekulargewicht der "Einzelkomponenten" ergibt sich aus ihrem Gehalt an funktionellen Gruppen (insbesondere Hydroxylgruppen) und ihrer Funktionalität und kann im übrigen auch beispielsweise gelchromatographisch bestimmt werden.

Das mittlere Molekulargewicht der Komponente b) liegt innerhalb der obengenannten Grenzen. Dies - schließt jedoch nicht aus, daß Einzelkomponenten des gegebenenfalls als Komponente b) eingesetzten Gemischs ein außerhalb dieser Grenzen liegendes Molekulargewicht aufweisen.

Als Komponente b) bzw. als Einzelbestandteil der Komponente b) kommen insbesondere b1) Polyesterpolyole und gegebenenfalls als Abmischkomponente b2) niedermolekulare, gegebenenfalls Estergruppen aufweisende aliphatische Polyole des Molekulargewichtsbereichs 62 bis 799, vorzugsweise 62 bis 200 in Betracht.

Geeignete Polyesterpolyole b1) sind beispielsweise solche des obengenannten Molekulargewichtsbereichs von 800 bis 12 000, vorzugsweise 800 bis 4000 und insbesondere 1000 bis 3000. Unter "Polyesterpolyolen" sollen im Rahmen der Erfindung beliebige organische Polyhydroxylverbindungen verstanden werden, die Estergruppen aufweisen. Der Begriff soll demzufolge auch die aus der Polyurethanchemie an sich bekannten Polycarbonatpolyole und die aus der Polyurethanchemie ebenfalls bekannten Polyhydroxypolyacrylate umfassen. Das (mittlere) Molekulargewicht der als Komponente b1) in Betracht kommenden Polycarbonatpolyole und der nachstehend beschriebenen Umsetzungsprodukte von mehrwertigen Alkoholen mit unterschüssigen Mengen an mehrwertigen Carbonsäuren liegt im allgemeinen innerhalb der obengenannten bevorzugten Grezen von 800 bis 4000, insbesondere 1000 bis 3000. Falls als "Polyesterpolyole" b1) jedoch die bekannten Polyhydroxypolyacrylate verwendet werden, kann deren mittleres Molekulargewicht auch oberhalb der zuletzt genannten Obergrenze von 4000 liegen und bis zu 12 000 betragen. In jedem Falle liegt jedoch das mittlere Molekulargewicht der Komponente b) innerhalb der obengenannten Grenze von 200 bis 2600, vorzugsweise 250 bis 2200 und kann erforderlichenfalls durch Zumischung von niedermolekularen Polyolen b2) eingestellt werden.

Geeignete Polyesterpolyole b1) sind vor allem die klassischen Umsetzungsprodukte von mehrwertigen Alkoholen mit unterschüssigen Mengen an mehrwertigen Carbonsäuren, wobei anstelle der Carbonsäuren selbstverständlich auch die entsprechenden Polycarbonsäureanhydride oder Polycarbonsäureester von niederen Alkoholen oder deren Gemische zur Herstellung der Polyester verwendet werden können. Die Polycarbonsäuren können aliphatischer, cycloaliphatischer, aromatischer und/oder heterocyclischer Natur sein und gegebenenfalls z.B. durch Halogenatome substituiert und/oder ungesättigt sein. Beispiele geeigneter, mehrwertiger Carbonsäuren bzw. Carbonsäure-Derivate sind:

Bernsteinsäure, Adipinsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Maleinsäure, Maleinsäureanhydrid, dimere und trimere Fettsäuren wie Ölsäure, gegebenenfalls in Mischung mit monomeren Fettsäuren, Terephthalsäuredimethylester, Terephthalsäurbisglykolester.

Als mehrwertige Alkohole kommen z.B. Ethandiol, 1,2-und 1,3-Propandiol, 1,3-, 2,3-und 1,4-Butandiol, 1,6-Hexan diol, 1,8-Octandiol, Neopentylglykol, 1,4-Bis(hydroxymethyl)cyclohexan, 2-Methyl-1,3-propandiol, 2,2,4-Trimethyl-1,3-pentandiol, 2-Ethyl-1,3-hexandiol, Glycerin, Trimethylolpropan oder 1,2,6-Hexantriol in Frage.

Die Polyester können anteilig endständige Carboxylgruppen aufweisen. Auch Polyester aus Lactonen, z.B. ε-Caprolaction oder Hydroxycarbonsäuren, z.B. ω-Hydroxycapronsäure, sind einsetzbar.

Geeignete Polycarbonatpolyole, die insbesondere als Abmischkomponente mitverwendet werden können, sind insbesondere die bekannten Polycarbonatdiole, wie sie aus den oben beispielhaft genannten Diolen und unterschüssigen Mengen an Diphenylcarbonat in an sich bekannter Weise zugänglich sind.

Geeignete Polyhydroxypolyacrylate sind die bekannten, Hydroxylgruppen aufweisenden Copolymerisate

von olefinisch ungesättigten Verbindungen wie beispielsweise Styrol, Acrylnitril, Acrylsäuremethylester, Acrylsäureethylester, Acrylsäurebutylester, die entsprechenden Methacrylsäureester mit Hydroxylgruppen aufweisenden Comonomeren wie z.B. Hydroxyethylacrylat, 2-Hydroxypropylacrylat, 3-Hydroxypropylacrylat und die entsprechenden Methacrylate.

Geeignete niedermolekulare Polyhydroxylverbindungen b2) des obengenannten Molekulargewichtsbereichs sind insbesondere die einfachen mehrwertigen Alkanpolyole wie z.B. die oben bei der Herstellung der Polyesterpolyole genannten, niedermolekularen Polyole. Gut geeignet als Ab mischkomponente b2) sind jedoch auch niedermolekulare Polyesterpolyole aus den oben beispielhaft genannten Ausgangsmaterialien, sofern ihr Molekulargewicht unter 800 liegt.

Bei der Herstellung der erfindungsgemäßen Isocyanat-Prepolymeren aus den Ausgangsdiisocyanaten a) mit den Polyhydroxylverbindungen b) wird ein Äquivalentverhältnis zwischen Isocyanatgruppen zu Hydroxylgruppen von 1,6:1 bis 2:1, vorzugsweise 1,8:1 bis 2:1 eingehalten. Werden zusätzlich zu den erfindungswesentlichen Diisocyanaten a) mit primär/tertiär gebundenen Isocyanatgruppen unterschüssige Mengen an Diisocyanaten ohne tertiär gebundene Isocyanatgruppen in Mengen bis zu 25 Äquivalentprozent bezogen auf die Gesamtmenge der Ausgangsdiisocyanate a) mitverwendet, so gilt für das Äquivalentverhältnis Isocyanatgruppen zu Hydroxylgruppen die Einschränkung, daß im angegebenen Rahmen des NCO/OH-Verhältnisses das Verhältnis von nicht tertiär gebundenen Isocyanatgruppen zu OH-Gruppen $NCO_{(nicht\ tertiär)}/OH \leq 1$ ist.

In der Regel verfährt man so, daß man die Ausgangskomponenten a) und b) gemeinsam vorlegt, homogen verrührt und die Umsetzung im Temperaturbereich von 20 bis 200°C, bevorzugt von 40 bis 140°C, besonders bevorzugt von 40 bis 100°C ablaufen läßt. Die Reaktion ist beendet, wenn der aus der Stöchiometrie der Ausgangsmaterialien errechnete theoretische NCO-Gehalt erreicht oder geringfügig unterschritten ist. Der Restmonomerengehalt an freien Diisocyanaten a) liegt im allgemeinen bereits unter 2 Gew.-%, bevorzugt unter 1 Gew.-%, in Abhängigkeit von den verwendeten Ausgangsmaterialien und den eingehaltenen Reaktionsbedingungen. Wurden Diisocyanate a) ohen tertiär gebundene Isocyanatgruppen mitverwendet, wie z.B. Hexamethylendiisocyanat, so liegt deren Restmonomerengehalt under 0,1 Gew.-%

Die Herstellung der erfindungsgemäßen Prepolymere kann sowohl in der Schmelze bevorzugt jedoch auch in inerten Lösungsmitteln durchgeführt werden, um direkt die gebrauchsfähigen Lackkomponenten zu erhalten, wobei man bevorzugt bis zu 30 Gew.-%, besonders bevorzugt bis zu 20 Gew.-%, Lösungsmittel, bezogen auf Lösung, verwendet. Die Prepolymere können selbstverständlich auch mit niedrigerem Festkörpergehalt gelöst werden, was im Zuge ihrer Verwendung als Komponenten für High-solids-Lacke jedoch nicht bevorzugt ist.

Als brauchbare inerte Lösungsmittel dienen z.B. Ethylacetat, Butylacetat, Ethylenglykolmonomethyl- oder -ethyletheracetat, 1-Methoxypropyl-2-acetat, 2-Butanon, 4-Methyl-2-pentanon, Cyclohexanon, Toluol, Xylol, Solventnaphtha oder deren Gemische. Ebenfalls als Lösungsmittel verwendbar sind Weichmacher wie z.B. solche auf Basis von Phosphorsäure-, Sulfonsäure-oder Phthalsäureester.

Die erfindungsgemäßen NCO-Prepolymere weisen durch geeignete Auswahl der Ausgangsverbindungen zu ihrer Herstellung im übrigen eine mittlere NCO-Funktionalität von mindestens 2,1, vorzugsweise von 2,1 bis 4, insbesondere zwischen 2,5 und 3,0 auf. Ihre mittleren Molekulargewichte, berechnet aus der Stöchiometrie der Ausgangsmaterialien, liegen im allgemeinen zwischen 1000 und 3000, insbesondere bei 1200 bis 2500. Die Prepolymer-Lösungen, die bevorzugt in Konzentrationen von 75 bis 85 % Festkörper eingestellt werden, weisen vorzugsweise einen Isocyanatgruppengehalt von 3,5 bis 10 % auf; ihre Viskositäten (gemessen bei 23°C) liegen im Bereich von 1000 bis 100 000 mPas, in Abhängigkeit von der gewählten Konzentration. Die erfindungsgemäßen Isocyanatprepolymere zeichnen sich insbesondere durch einen stark verminderten Monomerengehalt aus, der unter 2 Gew.-%, vorzugsweise unter 1 Gew.-% liegt.

Die mittlere NCO-Funktionalität der erfindungsgemäßen Verfahrensprodukte läßt sich aus den Daten der bei der Herstellung eingesetzten Ausgangsmaterialien nach folgender Gleichung berechnen:

$$F_{NCO} = \frac{\sum Val_{NCO} - \sum Val_{OH}}{\sum Mol_{(NCO + OH)} - \sum Val_{OH}}$$

In dieser Gleichung stehen "$Val_{NCO}$" für die Anzahl der Grammäquivalente Isocyanatgruppen der Komponente a), "$Val_{OH}$" für die Anzahl der Grammäquivalente Hydroxylgruppe der Komponente b) und "$Mol_{(NCO + OH)}$" für die Anzahl der Mole an Polyisocyanaten a) und Polyhydroxylverbindungen b), wobei im Falle der

Verwendung von Gemischen b) die entsprechenden Mittelwerte in die Gleichung eingesetzt werden. Bei der weniger bevorzugten Verwendung von Komponenten b), die neben Hydroxylgruppen auch noch untergeordnete Mengen an Carboxylgruppen aufweisen, müssen selbstverständlich auch diese Carboxylgruppen als gegenüber Isocyanatgruppen reaktionsfähige Gruppen be rücksichtigt werden. Diese gilt auch für das obengenannte Äquivalentverhältnis zwischen Isocyanatgruppen und Hydroxylgruppen d.h. der Begriff "Hydroxylgruppen" steht in diesem Zusammenhang stellvertretend für alle gegenüber Isocyanatgruppen reaktionsfähigen Gruppen. Im allgemeinen ist der Gehalt an Carboxylgruppen in der Komponente b) jedoch vernachlässigbar gering.

Die erfindungsgemäßen Verfahrensprodukte eignen sich als Isocyanatkomponenten in Polyurethansystemen, insbesondere zur Herstellung von Lacken, Beschichtungs-oder Dichtungsmassen und lassen sich als Ein-oder Zweikomponentensysteme verarbeiten, wobei insbesondere im erstgenannten Fall auch eine Verwendung der Verfahrensprodukte in mit Blockierungsmitteln für Isocyanatgruppen blockierter Form in Betracht kommt. Geeignete Blockierungsmittel sind beispielsweise Malonsäurediethylester, ε-Caprolactam oder Butanonoxim.

Bei der bevorzugten Verwendung der erfindungsgemäßen Verfahrensprodukte als Isocyanatkomponente in Zweikomponentensystemen werden die NCO-Prepolymere mit Isocyanat-reaktiven Verbindungen als Reaktionspartner kombiniert. Hierzu eignen sich z.B. Polyhydroxylverbindungen der in der Polyurethanchemie an sich bekannten Art, wie sie vorstehend schon als Aufbaukomponenten b) beschrieben wurden. In einer bevorzugten Ausführungsform werden Kombinationen aus den erfindungsgemäßen NCO-Prepolymeren mit Polyketiminen auf Basis von Polyaminen mit aliphatisch oder cycloaliphatisch gebundenen primären Aminogruppen und aliphatischen oder cycloaliphatischen Ketonen als Reaktionspartner verwendet. Solche Polyket imine sind z.B. in DE-AS 15 20 139 oder DE-OS 33 08 418 beschrieben. Selbstverständlich können als Reaktionspartner auch Mischungen der gegenüber Isocyanatgruppen reaktiven Verbindungen eingesetzt werden. Das Mengenverhältnis zwischen den Komponenten wird dabei im allgemeinen so bemessen, daß das Äquivalentverhältnis von Isocyanatgruppen der erfindungsgemäßen Prepolymere zur Summe der gegenüber Isocyanatgruppen reaktiven funtionellen, gegebenenfalls zumindest teilweise reversibel blockierten Gruppen (Ketimingruppen) sich wie 0,9:1 bis 4:1, vorzugsweise 1:1 bis 2:1 und insbesondere 1:1 bis 1,2:1 verhält.

Bei der Herstellung entsprechender Kombinationen für die erfindungsgemäße Verwendung können bei der Vermischung der erfindungsgemäßen NCO-Prepolymere mit den genannten Reaktionspartnern inerte organische Lösungsmittel oder Weichmacher zugegeben werden, wie sie schon bei der Herstellung der Prepolymere beispielhaft genannt wurden. Sie sollten weitgehend wasserfrei sein, um eine ausreichende Lagerstabilität der Gemische zu gewährleisten, und sie werden im übrigen nur in solchen Mengen mitverwendet, wie es zur Einstellung einer ausreichenden Verarbeitungsviskosität der Mischungen erforderlich ist. Vorzugsweise werden Festkörpergehalte von mindestens 50 Gew.-%, insbesondere 60 bis 90 Gew.-% eingestellt; bei geeigneter Wahl der Ausgangskomponenten ist es jedoch prinzipiell auch möglich lösungsmittelfreie, also 100 %ige Kombinationen zu verwenden.

Selbstverständlich ist es auch möglich, die in der Lacktechnologie üblichen Additive, Hilfs-und Zusatzmittel mitzuverwenden, wie z.B. Pigmente, Füllstoffe, Verlaufshilfsmittel, Katalysatoren oder Stabilisatoren.

Die erfindungsgemäßen NCO-Prepolymere und ihre gegenüber Isocyanatgruppen reaktiven Reaktionspartner können bei der Anwendung sowohl als echte Zweikomponentensysteme z.B. mit 2K-Spritzanlagen versprüht werden oder aber zu entsprechenden Lackkombinationen abgemischt werden, die dan je nach Wahl der Reaktionspartner Topf-und Verarbeitungszeiten von einigen Stunden bis zu mehreren Wochen aufweisen können. Innerhalb dieser zur Verfügung stehenden Topfzeit können die Beschichtungsmittel nach an sich bekannten Methoden, wie beispielsweise durch Spritzen, Streichen, Tauchen, Fluten oder mit Hilfe von Walzen oder Rakeln auf beliebige Substrate ein-oder mehrschichtig aufgetragen werden.

Die Überzüge können dann bei erhöhter Temperatur getrocknet und eingebrannt werden. Insbesondere bei der bevorzugten Ausführungsform unter Verwendung von Polyketiminen als Reaktionspartner der erfindungsgemäßen NCO-Prepolymere ist jedoch auch eine schnelle Trocknung bei Raumtemperatur unter dem Einfluß von Luftfeuchtigkeit möglich. Selbstverständlich ist es auch möglich, die erfindungsgemäßen Verfahrensprodukte als alleinige Bindemittelkomponente in unter dem Einfluß von Luftfeuchtigkeit trocknenden Einkomponentensystemen zu verwenden.

Als Untergründe für die erfindungsgemäßen Überzüge kommen beliebige Substrate in Betracht, wie z.B.: Metall, Holz, Glas, Stein, keramische Materialien, Beton, harte und flexible Kunststoffe, Textilien, Leder und Papier. Diese Substrate können vor der Beschichtung mit den erfindungsgemäßen Beschichtungsmitteln gegebenengalls auch mit üblichen Grundierungen versehen sein.

Somit ist ein weiter Anwendungsbereich für die erfindungsgemäßen NCO-Prepolymere gegeben. Die Eigenschaften der erhaltenen Lacke lassen sich in einem breiten Bereich variieren, sowohl durch eine

geeignete Auswahl der Polyhydroxylverbindungen b), die bei der Herstellung der Propolymeren eingesetzt werden, als auch durch die richtige Wahl der Reaktionspartner für die erfindungsgemäßen NCO-Prepolymere. Somit lassen sich sowohl harte als auch elastische Beschichtungen herstellen, je nach dem gewünschten Verwendungszweck oder je nach Art des zu beschichtenden Untergrunds.

Die nachstehenden Beispiele sollen die Erfindung näher erläutern. Alle Prozentangaben beziehen sich auf Gewichtsprozente; Angaben in Teilen beziehen sich auf Gewichtsteile. Die NCO/OH-Verhältnisse beziehen sich auf Äquivalentverhältnisse.

## Beispiele

Ausgangsmaterialien:

Diisocyanat I:

1-Isocyanato-1-methyl-4(3)-isocyanatomethylcyclohexan (Beispiel 1 der DE-OS 3 402 623

Diisocyanat II:

1-Isocyanato-1-methyl-4-(4-isocyanatobut-2-yl)-cyclohexan (Beispiel 2 der DE-OS 3 402 623)

linearer Polyester I:

mittleres Molekulargewicht 1700, hergestellt aus 523 Teilen Adipinsäure, 309 Teilen 1,6-Hexandiol und 168 Teilen Neopentylglykol.
Hydroxylgruppengehalt: 2,0 %,
Carboxylgruppengehalt: <0,05 %.

linearer Polyester II:

mittleres Molekulargewicht 840, hergestellt aus Adipinsäure und 1,6-Hexandiol.
Hydroxylgruppengehalt: 4,0 %,
Carboxylgruppengehalt: <0,05 %.

verzweigter Polyester III:

OH-Zahl 145, hergestellt aus 334 Teilen Isophthalsäure, 118 Teilen Adipinsäure, 60 Teilen Phthalsäureanhydrid, 380 Teilen 1,6-Hexandiol und 108 Teilen Trimethylolpropan.
Hydroxylfunktionalität: 3,0;
Carboxylgruppengehalt: <0,05 %.

Ketimin I:

Ketimine aus 3-Aminomethyl-3,5,5-trimethylcyclohexylamin (Isophorondiamin) und 4-Methyl-2-pentanon (Beispiel B 2 der DE-OS 3 308 418)

Ketimin II:

Ketimin aus 3-Aminomethyl-3,5,5-trimethylcyclohexylamin und Butanon (Beispiel B 1 der DE-OS 3 308 418)

Herstellung von erfindungsgemäßen Isocyanat-Prepolymeren

Beispiel 1

427 Teile des linearen Polyesters I, 100 Teile des verzweigten Polyesters III und 30 Teile 1,6-Hexandiol werden in 200 Teilen Butylacetat/Xylol = 1:1 gelöst und mit 243 Teilen des Diisocyanats I innerhalb ca. 3 h bei 60°C umgesetzt (NCO/OH = 2:1).

Man erhält eine 80 % Festkörper enthaltende klare Lösung mit einem NCO-Gehalt von 5,0 % und einer Viskosität bei 23°C von 1700 mPas. Der Gehalt an monomerem Diisocyanat I liegt bei 0,7 %. Das Polyisocyanat weist eine mittlere NCO-Funktionalität von 2,1 und ein mittleres Molekulargewicht von ca. 1400 auf.

Beispiel 2

455 Teile des linearen Polyesters I, 53 Teile des verzweigten Polyesters III, 32 Teile 1,6-Hexandiol und 210 Teile des Diisocyanats I werden in 250 Teilen Butylacetate/Xylol = 1:1 innerhalb 3 h bei 60°C und 1 h bei 110°C bei einem NCO/OH-Verhältnis von 1,8:1 zu einem Prepolymeren umgesetzt. Die erhaltene 75 %ige Lösung weist einen NCO-Gehalt von 3,8 %, eine Viskosität bei 23°C von 900 mPas und einen Gehalt an monomerem Diisocyanat I von 0,6 % auf. Das mittlere Molekulargewicht des Prepolymeren liegt bei 1750 bei einer durchschnittlichen NCO-Funktionalität von 2,1.

Beispiel 3

Eine Mischung aus 515 Teilen des linearen Polyesters I und 41 Teilen Trimethylolpropan werden in 150 Teilen Butylaceta/Xylol = 1:1 mit 294 Teilen des Diisocyanats I umgesetzt (NCO/OH = 2:1). Man läßt dazu 3 h bei 60°C reagieren und erhält eine 85 %ige klare Lösung mit einem Isocyanatgehalt von 5,9 %, einer Viskosität bei 23°C von 4500 mPas und einem Gehalt an monomerem Diisocyanat I von 0,3 %. Es wird ein Prepolymer mit einer durchschnittlichen NCO-Funktionalität von 2,5 und einem mittleren Molekulargewicht von ca. 1500 erhalten.

Beispiel 4

396 Teile des Diisocyanats I werden mit 408 Teilen des verzweigten Polyesters III und 46 Teilen Trimethylolpropan, gelöst in 150 Teilen Butylacetat/Xylol = 1:1, innerhalb ca. 5 h bei 60°C umgesetzt (NCO/OH = 2:1). Die erhaltene 85 %ige Lösung des Prepolymers weist einen NCO-Gehalt von 8,4 %, eine Viskosität bei 23°C von 14 000 mPas und einen Gehalt an monomerem Diisocyanat von 0,7 % auf. Das Prepolymer weist ein mittleres Molekulargewicht von 1300 und ein durchschnittliche NCO-Funktionalität von 3 auf.

Beispiel 5

Innerhalb von 6 h bei 60°C wird eine Mischung aus 208 Teilen des Polyesters I, 104 Teilen des Polyesters II, 196 Teilen des Polyesters III und 36 Teilen 2,2,4-Trimethyl-1,3-pentandiol in 200 Teilen Butylacetat mit 256 Teilen Diisocyanat I umgesetzt, bis der NCO-Gehalt nicht weiter abnimmt (NCO/OH = 1,8:1). Man erhält eine klare 80 %ige Lösung des Prepolymers, die einen NCO-Gehalt von 4,5 %, eine Viskosität bei 23°C von 5600 mPas und einen Gehalt an monomerem Diisocyanat I von 0,4 % aufweist. Das Prepolymer weist eine durchschnittliche NCO-Funktionalität von 2,3 und ein mittleres Molekulargewicht von 1700 auf.

Beispiel 6

Eine Mischung aus 400 Teilen des linearen Polyesters I, 104 Teilen des verzweigten Polyesters III; 31 Teilen 1,6-Hexandiol und 275 Teilen des Diisocyanats II wird in 150 Teilen Butylacetat/Xylol = 1:1 unter Katalyse mit 200 ppm Dibutylzinndilaurat bei 40 bis 60°C innerhalb ca. 1 h reagieren gelassen (NCO/OH = 1,8:1). Man erhält eine 85 %ige klare Lösung eines Isocyanatprepolymeren mit einem NCO-Gehalt von 4,2 %, einer Viskosität bei 23°C von 4300 mPas und einem Gehalt an monomerem Diisocyanat II von 0,3 %. Das Prepolymer weist eine durchschnittliche Funktionalität von 2,2 bei einem mittleren Molekulargewicht von 1850 auf.

Beispiel 7

479 Teile linearer Polyester I und 38 Teile Trimethylolpropan werden in 150 Teilen Butylacetat/Xylol = 1:1 bei 60°C innerhalb 3 h mit 333 Teilen Diisocyanat II umgesetzt (NCO/OH = 2:1). Die erhaltene 85 %ige klare Lösung weist bei einem NCO-Gehalt von 5,2 % eine Viskosität bei 23°C von 4800 mPas und einen Gehalt an monomerem Diisocyanat II von 0,8 % auf. Bei einer durchschnittlichen NCO-Funktionalität von 2,5 weist das Prepolymer ein mittleres Molekulargewicht von ca. 1700 auf.

Beispiel 8

Aus 349 Teilen des verzweigten Polyester III, 39 Teilen Trimethylolpropan und 412 Teilen des Diisocyanats II wird in 200 Teilen Butylacetat/Xylol = 1:1 innerhalb von ca. 5 h bei 60°C eine 80 %ige Prepolymerlösung mit einem NCO-Gehalt von 6,5 %, einer Viskosität bei 23°C von 7500 mPas und einem Gehalt an monomerem Diisocyanat II von 0,6 % hergestellt (NCO/OH = 2:1). Das Prepolymer weist eine mittlere Funktionalität von 3 und ein mittleres Molekulargewicht von ca. 1600 auf.

Anwendungsbeispiele:

Beispiel 9

Aus 725 Teilen des nach Beispiel 1 hergestellten 80 %igen Prepolymeren, 120 Teilen des Polyketimins II und 155 Teilen Butylacetat/Xylol = 1:1 wird ein gebrauchsfertiger Lack hergestellt. Bei einer Topfzeit des Lacks im geschlossenen Gebinde von ca. 10 Tagen trocknet ein in dicker Schicht (ca. 600 µm) aufgebrachter Lackfilm bei Raumtemperatur innerhalb ca. 1 1/2 h drucktrocken zu einem hochelastischen Film geringer Härte, der sich als Steinschlagschutzgrund eignet. Durch Temperaturerhöhung kann die Trockenzeit der Lacks deutlich reduziert werden.

Beispiel 10

Aus 394 Teilen der nach Beispiel 4 hergestellten 85 %igen Prepolymerlösung, 132 Teilen des Polyketimins I, 233 Teilen eines handelsüblichen Titandioxidpigments und 241 Teilen Butylacetat/Xylol = 1:1 wird ein pigmentierter Decklack hergestellt. Während die Topfzeit des Lacks im geschlossenen Gebinde mehr als 30 Tage beträgt, ist ein ca. 40 µm dicker Lackfilm bei Raumtemperatur nach ca. 40 bis 50 Minuten sandtrocken und nach ca. 2 Stunden drucktrocken. Die Applikationsviskosität des 70 % Festkörper enthaltenden Lacks beträgt 30 sec (im DIN 4-Becher), und es werden folgende lacktechnischen Daten gefunden:

Pendelhärte (DIN 53 157):
nach 4 h 82 sec
nach 24 h 123 sec
nach Alterung 177 sec

Erichsen-Wert (DIN ISO 1520): bis 8 mm

Beispiel 11

Durch Mischen von 661 Teilen der nach Beispiel 8 hergestellten 80 %igen Lösung des NCO-Prepolymeren mit 171 Teilen des Ketimins I und 168 Teilen Butylacetat/Xylol = 1:1 wird ein Klarlack hergestellt. Bei ausreichender Topfzeit von mehreren Tagen erfolgt bei einer Schichtdicke von ca. 40 µm bei Raumtemperatur schnelle Trocknung, nach ca. 50 Minuten sandtrocken und ca. 2 1/2 h drucktrocken. Die Lackfilme erreichen Decklackqualität und zeichnen sich nach Alterung durch ausreichende Härte bei hoher Elastizität und sehr guter Lösemittelbeständigkeit aus.

**Ansprüche**

1. Verfahren zur Herstellung von freie tertiäre Isocyanatgruppen aufweisenden Prepolymeren durch Umsetzung von

a) organischen Diisocyanaten des Molekulargewichtsbereichs 168 bis 320 mit einer, an ein primäres aliphatisches Kohlenstoffatom gebundenen, Isocyanatgruppe und einer, an ein tertiäres aliphatisches oder cycloaliphatisches Kohlenstoffatom gebundenen, Isocyanatgruppe, gegebenenfalls in Abmischung mit bis zu 25 Äquivalentprozent, bezogen auf die gesamte Komponente a), an Diisocyanaten mit aliphatisch und/oder cycloaliphatisch gebundenen Isocyanatgruppen des Molekulargewichtsbereichs 168 bis 300, welche keine an tertiäre Kohlenstoffatome gebundene Isocyanatgruppen aufweisen, mit

b) einer unterschüssigen Menge einer Polyolkomponente,

dadurch gekennzeichnet, daß man

(i) als Polyolkomponente b) mindestens ein Polyesterpolyol des Molekulargewichtsbereichs 800 bis 12 000 und einer Hydroxylfunktionalität von 2 bis 6, gegebenenfalls in Abmischung mit mindestens einem niedermolekularen, mehrwertigen aliphatischen Alkohol des Molekularge wichtsbereichs 62 bis 799 verwendet, wobei die Einzelbestandteile der Komponente b) so ausgewählt werden, daß die (mittlere) Hydroxylfunktionalität der Komponente b) bei 2,1 bis 3 liegt,

(ii) die Reaktionspartner unter Einhaltung eines NCO/OH-Äquivalentverhältnisses von 1,6:1 bis 2:1 zur Reaktion bringt und

(iii) die Art und Mengenverhältnisse der Reaktionspartner im übrigen so wählt, daß das (mittlere) Molekulargewicht der Prepolymeren innerhalb des Bereichs von 1000 bis 3000 und der NCO-Gehalt der Prepolymeren bei 4 bis 12 Gew.-% liegen.

2. Verfahren gemäß Anspruch 1, dadurch gekennzeichnet, daß man als Komponente a) Diisocyanate der Formel

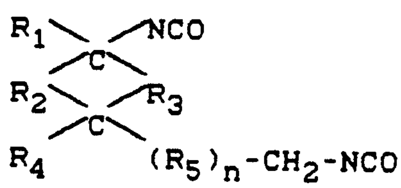

einsetzt, wobei

$R_1$ für einen Alkylrest mit 1 bis 4 Kohlenstoffatomen,

$R_2$ und $R_3$ für gleiche oder verschiedene, lineare oder verzweigte, zweiwertige gesättigte Kohlenwasserstoffreste mit 1 bis 4 Kohlenstoffatomen,

$R_4$ für Wasserstoff oder einen Alkylrest mit 1 bis 4 Kohlenstoffatomen,

$R_5$ für einen linearen oder verzweigten, gesättigten zweiwertigen Kohlenwasserstoffrest mit 1 bis 4 Kohlenstoffatomen und

n für 0 oder 1 stehen,

verwendet.

3. Verfahren gemäß Anspruch 1 und 2, dadurch gekennzeichnet, daß man als Komponente a) 1-Isocyanato-1-methyl-4(3)-isocyanatomethylcyclohexan verwendet.

4. Verfahren gemäß Anspruch 1 und 2, dadurch gekennzeichnet, daß man als Komponente a) 1-Isocyanato-1-methyl-4(4-isocyanatobut-2-yl)cyclohexan verwendet.

5. Verfahren gemäß Anspruch 1 und 2, dadurch gekennzeichnet, daß man als Komponente a) 1-Isocyanato-1,2,2-trimethyl-3-(2-isocyanatoethyl)cyclopentan verwendet.

6. Verfahren gemäß Anspruch 1 bis 5, dadurch gekennzeichnet, daß man als Komponente b) mindestens ein Polyesterpolyol des Molekulargewichtsbereichs 1000 bis 3000 und einer Hydroxylfunktionalität von 2 bis 4, gegebenenfalls in Abmischung mit mindestens einem Alkanpolyol des Molekulargewichtsbereichs 62 bis 200 und einer Hydroxylfunktionalität von 2 bis 4 verwendet.

7. Gemäß Anspruch 1 bis 6 erhaltene, freie Isocyanatgruppen aufweisende Prepolymere.

8. Verwendung der gemäß Anspruch 1 bis 6 erhaltenen, freie Isocyanatgruppen aufweisenden Prepolymeren, gegebenenfalls in mit Blockierungsmitteln für Isocyanatgruppen blockierter Form, als Isocyanatkomponente in Polyurethanlacken und -beschichtungen.

9. Verwendung gemäß Anspruch 8, dadurch gekennzeichnet, daß man die Prepolymeren in Kombination mit Ketiminen auf Basis von Polyaminen mit aliphatisch und/oder cycloaliphatisch gebundenen primären Aminogruppen und aliphatischen oder cycloaliphatischen Ketonen verwendet.